# EUROPÄISCHE PATENTSCHRIFT

(11) **EP 0 743 236 B1**
(45) Veröffentlichungstag und Bekanntmachung des Hinweises auf die Patenterteilung: **14.01.1998**
(21) Anmeldenummer: 96106987.9
(22) Anmeldetag: 03.05.1996
(51) Int. Cl.: B62D 1/19, F16F 7/08

(54) **Crashsystem für die Lenksäule in einem Kraftfahrzeug**
Crash system for the steering column in a motor vehicle
Système de déformation de la colonne de direction d'un véhicule automobile

(30) Priorität: 17.05.1995 DE 19518130
(43) Veröffentlichungstag der Anmeldung: 20.11.1996
(73) Patentinhaber: LEMFÖRDER METALLWAREN AG., 49441 Lemförde (DE)
(72) Erfinder: Vortmeyer, Jens, Dipl.-Ing., 32361 Preuzisc Oldendorf (DE); Grams, Kay Uwe, Dipl.-Ing., 49692 Cappeln (DE); Schäfer, Burkhard, Dipl.-Ing., 27777 Ganderkesee (DE)

(56) Entgegenhaltungen:
- EP-A- 0 636 809
- DE-U- 9 415 583
- FR-A- 2 544 816
- US-A- 3 486 396
- US-A- 3 741 032
- US-A- 4 901 829
- PATENT ABSTRACTS OF JAPAN vol. 008, no. 203 (M-326), 18.September 1984 & JP-A-59 092256 (MITSUBISHI DENKI KK), 28.Mai 1984,

## Beschreibung

Die Erfindung bezieht sich auf ein Crashsystem für die Lenksäule in einem Kraftfahrzeug, welches ein axiales Zusammenschieben der Lenksäule im Falle eines Zusammenstoßes des Kraftfahrzeuges mit einem Hindernis bewirken soll.

Solche axialen Schiebesysteme für die Lenkwelle sind meist in Verbindung mit Höhenverstelleinrichtungen für das Lenkrad bekannt. Ihr Wirkungsprinzip beruht darauf, daß ein auf eine vorbestimmte axiale Belastung der Lenksäule ausgelegtes Sicherungsglied bei einer Überschreitung der vorgegebenen Belastung bricht, so daß die durch das Sicherungsglied miteinander verbundenen Bauteile voneinander getrennt werden.

Aus der DE-PS 39 41 049, der US-PS 3,788,148 und der US-PS 3,392,599 ist ein solches System bekannt, bei dem zwischen ineinandergreifenden Rohrenden eine Einlage mit Kugelkörpern eingeklemmt ist, die sich am Außenumfang des inneren Rohrendes und am Innenumfang des äußeren Rohrendes in den Werkstoff der Rohrenden eindrücken, sodaß eine hinreichend drehfeste und axial bis zu einem Höchstwert belastbare Verbindung beider Rohrenden entsteht, die von der Crashkraft überwunden werden muß. Die Herstellung solcher Crashsysteme ist sehr teuer und in der technischen Ausführung nur ungenau zu erreichen.

Aus G 94 15 583 U1 ist ein Crashsystem für die Lenksäule in einem Kraftfahrzeug bekannt, das sich unabhängig vom Fahrzeugtyp und in Anpassung an die gewünschte Crashkraft einstellen laßt. Dieses axial wirksame Schiebesystem als Crashsicherung für die Lenksäule schiebt sich im Crashfall axial zusammen. Das System besteht aus zwei mit ihren Enden teleskopisch ineinandergreifenden Metallrohren, wobei am Außenumfang des inneren Metallrohres und am Innenumfang des äußeren Metallrohres radiale Vorsprünge mit einer relativ kurzen axialen Ausdehnung vorgesehen sind, die radial ineinandergreifen und eine zwar axial verschiebliche, aber drehfeste Verbindung der Metallrohre bewirken. Dabei dienen Spannschellen im Bereich der ineinandergreifenden Rohrenden zur Erzielung eines Reibungsschlusses zwischen den Rohrenden.

Dementsprechend ist es Aufgabe der Erfindung, ein axial wirksames Schiebesystem als Crashsicherung für die Lenksäule eines Kraftfahrzeuges zu schaffen, welches sich im Crashfalle axial zusammenschiebt und welches unabhängig von der Fahrzeugtype und in Anpassung an die gewünschte Crashkraft einstellen laßt.

Die Erfindung löst diese Aufgabe durch ein Crashsystem mit den Ausbildungsmerkmalen nach dem Patentanspruch 1.

Eine solche Ausbildung hat gegenüber bekannten Systemen den Vorteil, daß die Reibschlußverbindung der beiden ineinandergreifenden Rohrenden beliebig an gestellte Anforderungen angepaßt werden kann, konstruktionsunabhängig ist und im Crashfalle das axial geführte Zusammenschieben der beiden teleskopisch ineinandergreifenden Rohrenden gewährleistet.

Die vorteilhafte Anwendung der Erfindungsmerkmale erfolgt in Verbindung mit Metallrohren, insbesondere Stahlrohren, und Spannmittel aus einer oder mehreren Spannschellen mit einer Spannschraube, deren Gewinde eine möglichst geringe Steigung aufweist.

Geeignete Toleranzringe für die Einlage zwischen beiden ineinandergreifenden Rohrenden sind in unterschiedlichen Ausführungsformen im Handel erhältlich. Den Toleranzringen ist gemeinsam, daß sie ein Querschnittsprofil aufweisen, welches einerseits zusammendrückbar ist und andererseits die Eigenschaft hat, beim Zusammendrücken einen guten Reibschluß zwischen den ineinandergreifenden Rohrenden zu bewirken. Besonders geeignet sind Toleranzringe mit einem in der radialen Schnittebene wellenförmigen Querschnittsprofil. Die Spannschelle befindet sich an der Stelle der Anordnung eines Toleranzringes und weist ein vorzugsweise stabiles, an einer Stelle geschlitztes Querschnittsprofil auf, so daß eine Spannschraube, deren Gewinde eine möglichst geringe Steigung aufweist, eine radiale Einspannung des Toleranzringes zwischen den beiden Rohrenden ermöglicht.

Mehrere Toleranzringe und um das Außenrohr an der Stelle eines Toleranzringes gelegte Schellen können in Abständen axial hintereinander angeordnet sein, wenn Bauumstände oder Crashkräfte dies erfordern.

In der Zeichnung ist ein Crashsystem nach der Erfindung teils schematisch dargestellt. Es zeigen:
- Figur 1: einen Schnitt in einer durch die Längsachse gelegten Ebene,
- Figur 2: eine Seitenansicht der Anordnung in Figur 1 und
- Figur 3: einen Querschnitt der in den Figuren 1 und 2 dargestellten Anordnung im Bereich einer Spannschelle.

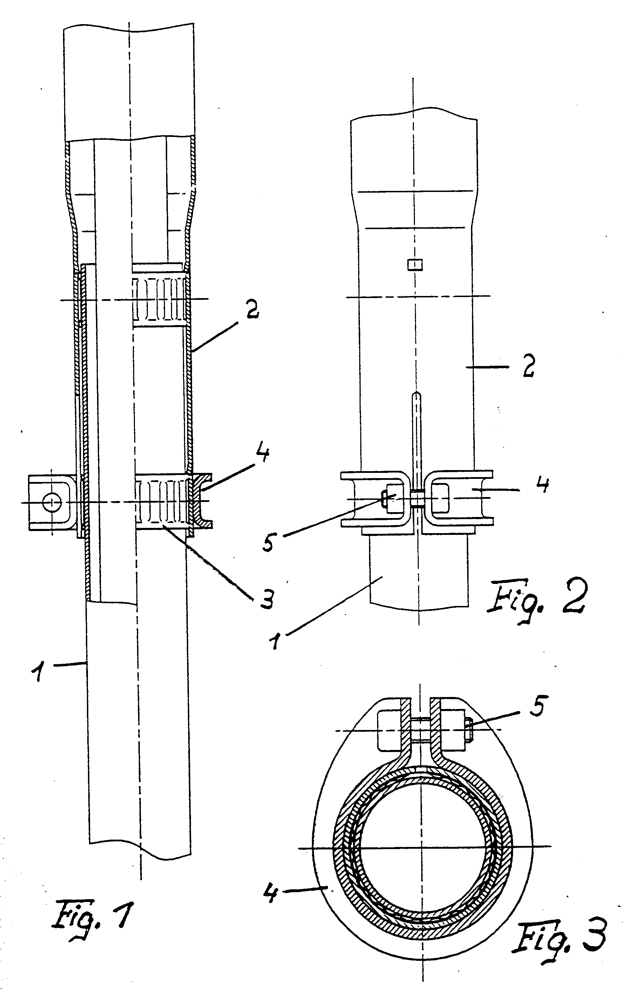

Das Crashsystem besteht aus den beiden mit ihrem jeweils einen Ende teleskopisch ineinandergreifenden Metallrohren 1 und 2. An wenigstens einer Stelle ist zwischen den beiden Metallrohrenden 1 und 2 ein Toleranzring 3 handelsüblicher Art angeordnet. An Stellen der Anordnung eines solchen Toleranzringes 3 befindet sich eine das Außenrohr 2 umschließende Spannschelle 4 stabiler Ausbildung, deren Enden durch eine Spannschraube 5 zusammendrückbar sind, um dadurch radiale Spannkräfte auf den zwischen dem Außenrohr 2 und dem Innenrohr 1 angeordneten Toleranzring 3 auszuüben. Im Beispiel weist die Spannschelle 4 in der Schnittebene entsprechend Figur 1 ein u-förmiges Profil auf. Das Gewinde der Spannschraube 5 besitzt eine relativ geringe Steigung, so daß durch Anziehen der Mutter der Spannschraube 5 kontrolliert radiale Spannkräfte auf den Toleranzring und somit auf die beiden teleskopisch ineinandergreifenden Rohrenden 1 und 2 ausgeübt werden können. Die Anordnung erlaubt eine feinfühlige Justage der auf diese Weise erreichten Reibschlußverbindung zwischen den Rohrenden 1 und 2 im Hinblick auf die Crashkräfte und deren kontrollierte Ausbreitung in der Lenksäule eines Kraftfahrzeuges. Mehrere Toleranzringe 3 in Verbindung mit Spannschellen 4 können in Achsrichtung der Lenksäule mit Abständen nebeneinander angeordnet sein.

### BEZUGSZEICHENLISTE:

- 1: Rohrende
- 2: Rohrende
- 3: Toleranzring
- 4: Spannschelle
- 5: Spannschraube

## Patentansprüche

1. Crashsystem für die Lenksäule in einem Kraftfahrzeug, bei der zwei mit ihren einen Enden ineinandergreifende Rohrenden (1, 2) durch eine die beiden Rohrenden bis zu einer vorgegebenen axialen Belastung einstellbar verklemmende Einlage und einstellbare, radial wirksame und das äußere Rohrende (2) umschließende Spannmittel (3, 4, 6) miteinander verbunden sind,
dadurch gekennzeichnet, daß
die Einlage aus einem handelsüblichen Toleranzring (3) mit einem zusammendrückbaren Querschnittsprofil besteht.

2. Sicherheitslenksäule eines Kraftfahrzeuges nach Anspruch 1,
dadurch gekennzeichnet, daß
die Spannmittel (3, 4, 6) aus einer oder aus mehreren in Achsrichtung der Lenksäule mit einem Abstand voneinander angeordneten Spannschellen (4) mit einer Spannschraube (5) bestehen.

## Claims

1. Crash system for the steering column in a motor vehicle, in which column two tube ends (1, 2), which engage in one another with one of their ends, are connected to one another by an insert which locks the two tube ends in an adjustable manner until a predetermined axial loading is reached, and by adjustable, radially operative clamping means (3, 4, 6) which enclose the outer tube ends (2),
**characterised in that**
the insert consists of a commercial tolerance ring (3) with a compressible cross-sectional profile.

2. Safety steering column for a motor vehicle according to claim 1,
**characterised in that**
the clamping means (3, 4, 6) consist of one or a number of clamping collars (4) with a clamping screw (5), which are disposed at a distance from one another in the axial direction of the steering column.

## Revendications

1. Système de collision pour la colonne de direction dans un véhicule à moteur, dans lequel deux embouts de tube (1, 2) en prise l'un avec l'autre par une de leurs extrémités sont reliés entre eux par une pièce rapportée coinçant de manière réglable les deux embouts de tube jusqu'à une sollicitation axiale donnée, et par des moyens (3, 4, 6) de serrage d'efficacité radiale réglable et entourant l'embout de tube extérieur (2), caractérisé en ce que la pièce rapportée comprend un anneau de tolérance usuel (3) avec un profil en coupe transversale compressible.

2. Colonne de direction de sécurité d'un véhicule à moteur selon la revendication 1, caractérisée en ce que les moyens (3, 4, 6) de serrage comprennent une ou plusieurs brides de serrage (4), espacées l'une de l'autre dans la direction de l'axe de la colonne de direction, avec une vis de serrage (5).
